# EUROPÄISCHE PATENTSCHRIFT

(11) **EP 0 729 657 B1**
(45) Veröffentlichungstag und Bekanntmachung des Hinweises auf die Patenterteilung: **13.08.1997**
(21) Anmeldenummer: 94903858.2
(22) Anmeldetag: 21.12.1993
(51) Int. Cl.: H01S 3/03, H01S 3/038

(54) **4**
SLAB OR STRIPLINE LASER
LASER A GUIDE D'ONDES EN FORME DE SLAB OU DE DE BANDE

(30) Priorität: 23.12.1992 DE 9217640 U
(43) Veröffentlichungstag der Anmeldung: 04.09.1996
(73) Patentinhaber: Rofin Sinar Laser GmbH, 22113 Hamburg (DE)
(72) Erfinder: ERICHSEN, Kai, D-23714 Malente (DE); HAGE, Hermann, D-21033 Hamburg (DE); KNAPP, Wolfgang, D-22143 Hamburg (DE); LEIFERMANN, Berthold, D-21031 Hamburg (DE); SCHOLTZ, Volker, D-23554 Lübeck (DE); TAUFENBACH, Norbert, D-21493 Basthorst (DE)
(74) Vertreter: Tergau, Enno, Dipl.-Ing.
(86) Internationale Anmeldenummer: EP9303648
(87) Internationale Veröffentlichungsnummer: WO9415384

(56) Entgegenhaltungen:
- EP-A- 0 275 023
- EP-A- 0 305 893
- EP-A- 0 486 152
- WO-A-91/15045
- IEEE JOURNAL OF QUANTUM ELECTRONICS. Bd. QE-20, Nr. 3 , März 1984 , NEW YORK US Seiten 276 - 283 J.H.S.WANG ET AL. 'RADIO FREQUENCY PUMPED MID-INFRARED WAVEGUIDE LASERS'

## Beschreibung

Die Erfindung bezieht sich auf einen Slab- oder Bandleiterlaser mit zueinander parallelen gekühlten Elektroden, die zwischen ihren einander zugewandten Flachseiten einen Entladungsraum bilden, in dem sich ein zu pumpendes Gas befindet.

Slab- oder Bandleiterlaser sind beispielsweise aus der EP-Al-0 275 023 und der EP-A2-0 305 893 bekannt. Bei diesen Lasern wird zwischen zueinander parallelen plattenförmigen Elektroden ein schmaler Entladungsraum für ein Gas, insbesondere CO₂, gebildet, das durch eine an die Elektroden angelegte Hochfrequenzspannung angeregt wird. Gegenüber den Stirnseiten des durch die Elektroden gebildeten schmalen Entladungsraumes sind zum Erzielen einer Laserwirkung Resonatorspiegel angeordnet.

Bei diesen bekannten Gaslasern wird die beim Pumpen und aufgrund der Laserwirkung auftretende Wärme durch Wärmeleitung über die plattenförmigen Elektroden abgeführt, so daß ein kompliziertes Gaszirkulationssystem nicht mehr notwendig ist. Dies ist möglich, da die Elektroden verhältnismäßig großflächig sind und ihr gegenseitiger Abstand, der typischerweise wenige Millimeter beträgt, verhältnismäßig gering ist, so daß das zwischen den Elektroden eingeschlossene Gasvolumen in Relation zur Kühlfläche ebenfalls verhältnismäßig klein ist.

Die mit Slab- oder Bandleiterlasern erzielbare Laserausgangsleistung hängt von der Fläche der Elektroden ab, wobei pro Quadratzentimeter Elektrodenfläche etwa 1,5 W bis 2,0 W erzeugt werden können. Um hohe Ausgangsleistungen erzielen zu können, sind großflächige Elektroden erforderlich, die jedoch aufgrund ihrer ungleichmäßigen Erwärmung nicht mehr in ausreichendem Maße parallel zueinander gehalten werden können. Da die innenliegenden, d.h. die zum Gas bzw. Entladungsraum gerichteten Flachseiten erwärmt und die außenliegenden Flachseiten gekühlt werden, entsteht ein zur Wärmeabfuhr erforderlicher hoher Temperaturgradient, so daß sich die einander gegenüberliegenden Flachseiten einer Elektrode unterschiedlich thermisch ausdehnen. Dadurch entstehen Biegemomente, die bewirken, daß die Elektroden an ihren Enden einen größeren Abstand voneinander aufweisen als in der Mitte. Die dadurch verursachte Verzerrung des Resonators verschlechtert das Laserverhalten, d.h. dessen Modenstabilität und -reinheit. Da die Durchbiegung mit wachsender Länge der Elektroden zunimmt, lassen sich mit den bekannten Lasern somit aufgrund der durch thermische Biegung nur begrenzt möglichen Vergrößerung der Elektrodenflächen nur Laserausgangsleistungen von einigen 100 W erreichen.

Der Erfindung liegt nun die Aufgabe zugrunde, einen Slab- oder Bandleiterlaser anzugeben, mit dem ohne großen konstruktiven Aufwand eine höhere Ausgangsleistung erhalten werden kann.

Die genannte Aufgabe wird gemäß der Erfindung gelöst durch einen Slab- oder Bandleiterlaser mit den Merkmalen des Anspruches 1. Ein Slab- oder Bandleiterlaser gemäß der Erfindung enthält zueinander parallele gekühlte Elektroden, die zwischen ihren einander zugewandten Flachseiten einen Entladungsraum bilden, in dem sich ein zu pumpendes Gas befindet, wobei die Elektrooen jeweils mehrere Abschnitte enthalten, die wenigstens über einen Teil der Dicke, insbesondere über den größeren Teil der Dicke der jeweiligen Elektrode räumlich voneinander getrennt und derart gelagert sind, daß den durch thermische Ausdehnung verursachten Bewegungen ihrer vom Entladungsraum abgewandten Flachseiten nur ein vernachlässigbarer mechanischer Widerstand entgegengesetzt wird.

Durch diese Maßnahme verbiegen sich die Elektroden nicht mehr als Ganzes durch die Wirkungen des Temperaturgradienten zwischen ihrer heißen Innenfläche und ihrer kalten Außenfläche. Vielmehr verbiegen sich die Abschnitte einzeln, so daß die Krümmung der gesamten Elektrode in Einzelkrümmungen der Abschnitte aufgeteilt wird, die wiederum so klein sind, daß sie das Betriebsverhalten des Lasers nicht mehr oder nur noch unwesentlich beeinflussen. Die Aufteilung in unschädliche Einzelkrümmungen ist möglich, da die Elektroden derart gelagert sind, daß thermische Ausdehnungsbewegungen ihrer vom Entladungsraum abgewandten Flachseiten ungehindert möglich sind.

In einer bevorzugten Ausführungsform sind Abschnitte vorgesehen, die durch nutenförmige Einschnitte in einer Flachseite der Elektroden voneinander getrennt sind. Die Übergangsflächen im Bereich dieser nutenförmigen Einschnitte, an denen die einzelnen Abschnitte zusammenhängen, wirken dabei als Scharniere, die eine Zerlegung der Krümmung der gesamten Platte in Einzelkrümmungen der Abschnitte ermöglichen. Versuche haben dabei ergeben, daß die Durchbiegung bei einer derart dreigeteilten Elektrode nur noch ungefähr 10 % der Durchbiegung ungeteilten Elektrode gleicher Größe beträgt.

Die nutenförmigen Einschnitte sind vorzugsweise an den vom Entladungsraum abgewandten Flachseiten der Elektroden vorgesehen und erstrecken sich insbesondere quer zur Längsrichtung der Elektroden.

In einer weiteren vorteilhaften Ausgestaltung der Erfindung sind nutenförmige Einschnitte an den dem Entladungsraum zugewandten Flachseiten der Elektroden vorgesehen.

Vorzugsweise ist die Tiefe der nutenförmigen Einschnitte größer als 4/5, insbesondere größer als 9/10 der gesamten Dicke der Elektrode.

Zur Erleichterung der Scharnierwirkung sind die nutenförmigen Einschnitte in einer besonders bevorzugten Ausführungsform mit einem abgerundeten Nutgrund versehen.

In einer weiteren vorteilhaften Ausgestaltung der Erfindung sind Elektroden mit wenigstens zwei Lagen vorgesehen, von denen eine durch mehrere räumlich voneinander getrennte, nebeneinander auf der anderen Lage angeordnete Einzelsegmente gebildet wird. Befinden sich die Einzelsegmente auf der dem Entladungsraum zugewandten Seite der Elektroden, so ist vorzugsweise eine diese Abschnitte zusammenhängend zum Entladungsraum hin abschirmende Platte vorgesehen.

In einer bevorzugten Ausführungsform der Erfindung sind zwischen den Elektroden Abstandshalter angeordnet. Dadurch werden der Abstand der Elektrodenplatten und damit die Resonatorbedingung möglichst genau eingehalten. In diesem Fall muß nur eine Elektrode gleitfähig gelagert sein, da dann die andere Elektrode über die Abstandshalter an die untere Elektrode fixiert ist, so daß deren zusätzliche Fixierung in einem Lasergehäuse nicht mehr erforderlich ist, so daß sie ebenfalls keiner Behinderung ihrer an der Rückseite stattfindenden thermischen Bewegungen ausgesetzt ist.

Eine hohe Kühlleistung der einzelnen Abschnitte wird in einer bevorzugten Ausführungsform dadurch erreicht, daß jeder Abschnitt Kanäle für ein Kühlmittel enthält.

In einer besonders bevorzugten Ausführungsform sind die Abschnitte durch elastische, das Kühlmittel führende Verbindungselemente, untereinander verbunden.

Zur weiteren Erläuterung der Erfindung wird auf die Ausführungsbeispiele der Zeichnung verwiesen, in deren

Figur 1 die bevorzugte Ausführungsform eines Slab- oder Bandleiterlasers gemäß der Erfindung in einer perspektivischen Ansicht schematisch veranschaulicht ist.

Figuren 2, 3 und 4 zeigen jeweils in einem Teilquerschnitt weitere vorteilhafte geometrische Ausgestaltungen von erfindungsgemäßen Elektroden, und in

Figuren 5 und 6 sind weitere geeignete Elektrodengestaltungen perspektivisch veranschaulicht.

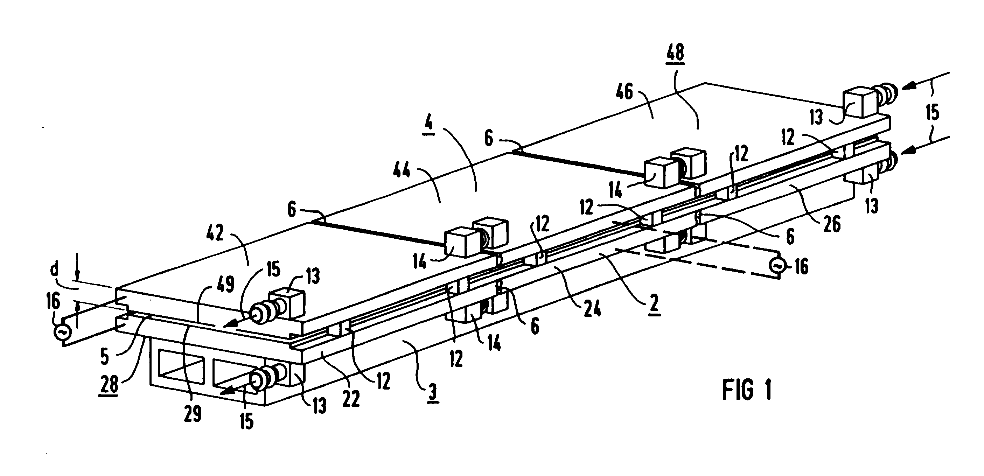

Gemäß **Figur 1** enthält ein Slab- oder Bandleiterlaser zwei in einer Längsrichtung ausgedehnte Elektroden 2 und 4, die zwischen ihren einander zugewandten Flachseiten 29 bzw. 49 einen verhältnismäßig schmalen Entladungsraum 5 bilden, in dem sich das zu pumpende Gas, insbesondere CO₂, befindet. Die vorzugsweise metallischen, insbesondere aus Kupfer Cu bestehenden Elektroden 2 und 4 bilden die Wände eines sich in Längsrichtung der Elektroden 2 und 4, d.h. von links vorne nach rechts hinten erstreckenden Wellenleiters. Dieser Wellenleiter bildet gemeinsam mit gegenüber den Stirnseiten der Elektroden angeordneten und in der Figur nicht dargestellten Resonatorspiegeln eine Resonatorstrecke.

Zur Anregung des innerhalb des Entladungsraumes befindlichen Gases sind die Elektroden 2 und 4 an einen Hochfrequenzgenerator 16 angeschlossen. Dieser Anschluß kann entweder an den Stirnflächen der Elektroden 2 und 4 oder wie gestrichelt veranschaulicht an der Längskante der Elektroden 2 und 4 erfolgen.

Die Elektroden 2 und 4 sind durch sich quer zur Längsrichtung erstreckende nutenförmige Einschnitte 6 in Abschnitte 22, 24 und 26 bzw. 42, 44 und 46 unterteilt. Durch diese nutenförmigen Einschnitte 6 sind die Abschnitte 22, 24, 26 bzw. 42, 44 und 46 wenigstens über einen Teil der Dicke d der Elektroden 2 und 4 räumlich voneinander getrennt. Die nutenförmigen Einschnitte 6 befinden sich dabei in den äußeren Flachseiten 29 und 49 der Elektroden 2 bzw. 4 und nehmen den größeren Teil der Dicke d der Elektroden 2 und 4 ein. Die zwischen dem Nutgrund und der dem Entladungsraum 5 zugewandten Flachseiten 29 und 49 verbleibende Restdicke beträgt vorzugsweise weniger als d/5, insbesondere weniger als d/10. Die nutenförmigen Einschnitte 6 haben einen gerundeten Nutgrund, um auf diese Weise die Spannungen bei der unabhängigen Durchbiegung der einzelnen Abschnitte 22, 24, 26, 42, 44 und 46 zu verringern, und dadurch mögliche Störungen an den dem Entladungsraum 5 zugewandten Oberflächen 29 und 49 der Elektroden 2 bzw. 4 zu minimieren.

Die äußeren Abschnitte 22, 26 und 42, 46 der Elektroden 2 bzw. 4 enthalten Anschlüsse 13 für ein Kühlmedium, das in Richtung der Pfeile 15 in innerhalb der Elektroden 2 und 4 verlaufende und in der Figur nicht sichtbare Kühlkanäle eingeleitet wird. Die mittleren Abschnitte 24 und 44 sind mit ihren benachbarten Abschnitten 22, 26 bzw. 42, 46 durch elastische, das Kühlmittel überleitende Verbindungselemente 14 untereinander verbunden. Die Verbindungselemente 14 sind dabei so ausgebildet, daß sie mechanischen Verformungen der Elektroden 2, 4, wie sie bei Erwärmung auftreten, nachgeben können.

Anstelle der in der Figur dargestellten Kühlung in Form einer Serienschaltung der Abschnitte 22, 24, 26 bzw. 42, 44, 46 können die einzelnen Abschnitte auch jeweils separat an eine von außen herangeführte Kühlmittelleitung angeschlossen sein.

Die Elektrode 2 ist gleitend oder schwimmend auf einem von einem Hohlprofil gebildeten Träger 3 montiert und kann sich auf diesem Träger 3 in einem durch in der Figur nicht dargestellte Anschläge begrenzten Ausmaß frei bewegen, so daß die sich innerhalb der Elektroden 2 und 4 durch ungleichmäßige thermische Ausdehnung ergebenden mechanischen Spannungen reduziert werden. Die obere Elektrode 4 ist über Abstandshalter 12 in einem vorgegebenen Abstand zur Elektrode 2 gelagert. Stattdessen oder zusätzlich zu den Abstandshaltern 12 könnte auch die obere Platte 4 durch einem dem Träger 3 entsprechenden Träger ebenfalls gleitend oder schwimmend gehalten werden.

Anstelle von sich in Querrichtung erstreckenden nutenförmigen Einschnitten 6 können auch sich in Längsrichtung erstreckende nutenförmige Einschnitte vorgesehen sein, wobei dann diese Abschnitte in analoger Weise durch entsprechende Verbindungselemente für das Kühlmittel untereinander verbunden werden können.

Mit einem Laser gemäß Figur 1 können wesentlich höhere Ausgangsleistungen als mit vorbekannten Lasern der gleichen Art erreicht werden, da größere Elektrodenflächen möglich sind, mit denen höhere Ausgangsleistungen des Lasers möglich sind. Da pro Quadratzentimeter etwa 1,5 bis 2 W Laserausgangsleistung möglich ist, können durch Elektroden von etwa lm Länge und 20 cm Breite Laserausgangsleistungen in der Größenordnung von 2 kW erzielt werden.

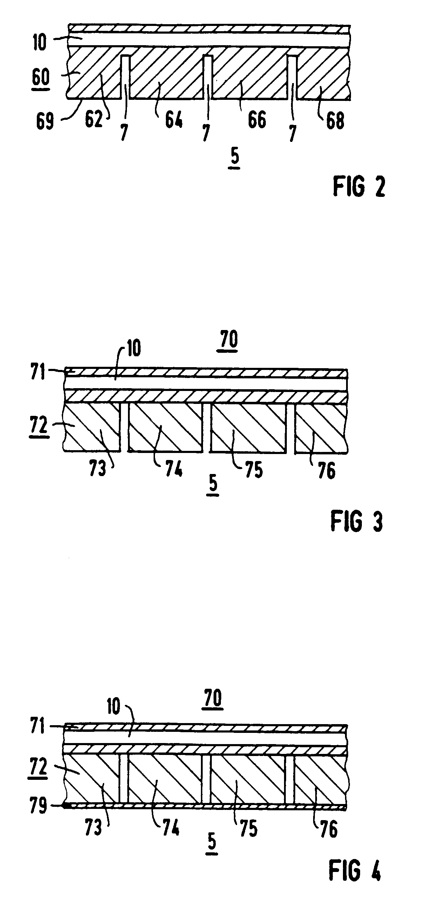

Gemäß **Figur 2** kann auch eine metallische Elektrode 60 vorgesehen sein, die durch nutenförmige Einschnitte 7 an ihrer dem Entladungsraum 5 zugewandten Flachseite 69 in mehrere räumlich voneinander getrennte Abschnitte 62, 64, 66 und 68 unterteilt ist. In der Figur ist außerdem ein sich im vom Entladungsraum 5 abgewandten Bereich der Elektrode 60 erstreckender Kühlkanal 10 zu erkennen.

Anstelle von nutenförmigen Einschnitten kann entsprechend **Figur 3** auch eine zweischichtig aufgebaute Elektrode 70 vorgesehen sein, die eine vom Entladungsraum abgewandte und die Kühlkanäle 10 enthaltende erste Schicht oder Lage 71 enthält, auf der in einer zweiten Schicht oder Lage 72 mehrere voneinander räumlich getrennte Segmente 73, 74, 75 und 76 angeordnet sind. Beide Schichten bestehen aus einem metallischen Werkstoff. Für die dem Entladungsraum zugewandte Schicht 72 ist insbesondere Kupfer Cu vorgesehen.

Um die Wellenleitereigenschaften des durch einen Aufbau gemäß Figur 3 gebildeten Wellenleiters möglichst wenig zu stören ist im Ausführungsbeispiel gemäß **Figur 4** zusätzlich eine dünne, vorzugsweise aus Kupfer bestehende Platte 79 vorgesehen, durch die die von den Kanten der Einschnitte möglicherweise ausgehenden Störungen des Feldverlaufes des anregenden HF-Feldes verhindert werden. Das in Figur 4 dargestellte Ausführungsbeispiel ist analog auch auf eine gemäß Figur 2 aufgebaute Elektrode anwendbar.

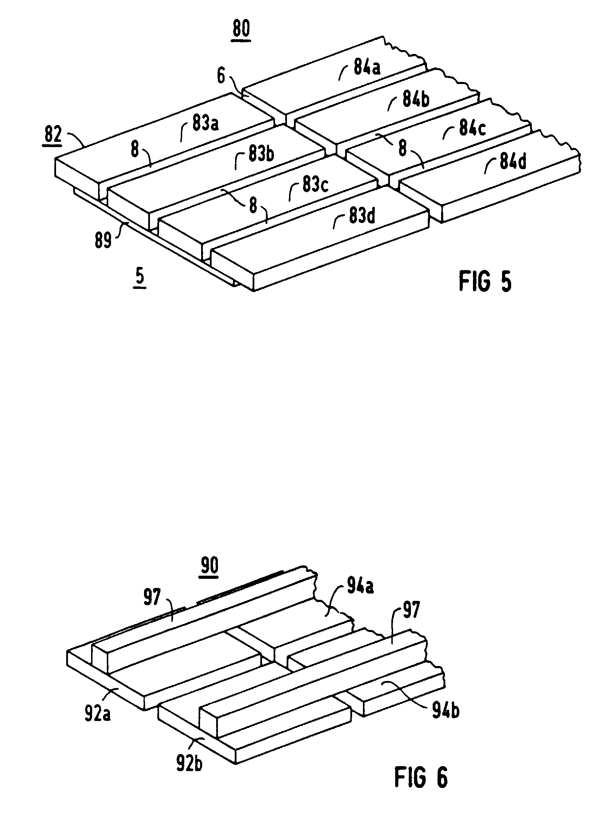

In **Figur 5** ist eine Ausgestaltung einer metallischen Elektrode 80 dargestellt, die eine obere Lage 82 und eine untere Lage 89 enthält. Die obere Lage 82 enthält eine Vielzahl von Einzelsegmenten 83a - d und 84a - d, die auf einer dünnen zusammenhängenden Platte 89 räumlich voneinander durch Quernuten 6 und Längsnuten 8 getrennt angeordnet sind. Anstelle des in Figur 5 dargestellten zweilagigen Aufbaus kann auch ein einschichtiger Aufbau vorgesehen sein, wobei dann die Quernuten 6 und Längsnuten 8 durch entsprechende Einschnitte in Analogie zum Ausführungsbeispiel gemäß Figur 1 gebildet werden.

Im Ausführungsbeispiel gemäß **Figur 6** ist eine Elektrode 90 veranschaulicht, die aus mehreren voneinander vollständig räumlich getrennten Einzelsegmenten 92a, 92b, 94a und 94b aufgebaut sind, die untereinander durch Halterungen 97 schwimmend oder gleitend verbunden sind.

## Patentansprüche

1. Slab- oder Bandleiterlaser mit zueinander parallelen gekühlten Elektroden (2, 4), die zwischen ihren einander zugewandten Flachseiten (29, 49) einen Entladungsraum (5) bilden, in dem sich ein zu pumpendes Gas befindet, **dadurch gekennzeichnet**, daß die Elektroden (2, 4) jeweils aus mehreren Abschnitten (22, 24, 26 bzw. 42, 44, 46) bestehen, die wenigstens über einen Teil der Dicke (d) der jeweiligen Elektrode (2 bzw. 4) räumlich durchgehend voneinander getrennt sind, wobei die Elektroden (2, 4) derart gelagert sind, daß den durch thermische Ausdehnung verursachten Bewegungen ihrer vom Entladungsraum (5) abgewandten Flachseiten (28 bzw. 48) nur ein vernachlässigbarer mechanischer Widerstand entgegengesetzt wird.

2. Slab- oder Bandleiterlaser nach Anspruch 1, **dadurch gekennzeichnet** , daß die Abschnitte (22, 24, 26; 42, 44, 46) über den größeren Teil der Dicke (d) der jeweiligen Elektrode (2 bzw. 4) voneinander räumlich getrennt sind.

3. Slab- oder Bandleiterlaser nach Anspruch 1 oder Anspruch 2, **dadurch gekennzeichnet**, daß die Abschnitte (22, 24, 26; 42, 44, 46) durch nutenförmige Einschnitte (6) in einer Flachseite (28 bzw. 48) der Elektrode (2 bzw. 4) voneinander getrennt sind.

4. Slab- oder Bandleiterlaser nach Anspruch 3, **dadurch gekennzeichnet**, daß nutenförmige Einschnitte (6) an den vom Entladungsraum (5) abgewandten Flachseiten (28, 48) der Elektroden (2, 4) vorgesehen sind.

5. Slab- oder Bandleiterlaser nach Anspruch 3 oder 4, **dadurch gekennzeichnet**, daß bei in einer Längsrichtung ausgedehnten Elektroden (2, 4) sich quer zu dieser Längsrichtung erstreckende nutenförmige Einschnitte (6) vorgesehen sind.

6. Slab- oder Bandleiterlaser nach einem der Ansprüche 3 oder 5, **dadurch gekennzeichnet**, daß nutenförmige Einschnitte (7) an den dem Entladungsraum (5) zugewandten Flachseiten (69) der Elektroden (60) vorgesehen sind.

7. Slab- oder Bandleiterlaser nach einem der Ansprüche 3 bis 6, **dadurch gekennzeichnet**, daß die Tiefe der nutenförmigen Einschnitte (6) größer als 4/5, insbesondere größer als 9/10 der Dicke der Elektrode (2, 4) beträgt.

8. Slab- oder Bandleiterlaser nach einem der Ansprüche 3 bis 7, **dadurch gekennzeichnet**, daß der Nutgrund abgerundet ist.

9. Slab- oder Bandleiterlaser nach Anspruch 1 oder Anspruch 2, **dadurch gekennzeichnet**, daß Elektroden (70, 80) mit jeweils einer ersten Lage (71 bzw. 82) und einer zweiten Lage (72 bzw. 89) vorgesehen sind, von denen eine Lage (72 bzw. 82) durch mehrere räumlich getrennt nebeneinander auf der anderen Lage (71 bzw. 89) angeordnete Einzelsegmente (73-76 bzw. 83a, 83b, 84a, 84b) gebildet wird.

10. Slab- oder Bandleiterlaser nach Anspruch 6 oder Anspruch 9, **dadurch gekennzeichnet**, daß auf den zum Entladungsraum (5) zugewandten Flachseiten der Elektroden (70, 80) eine die Einzelsegmente (73 - 76, 83a,b, 84a,b) überdeckende Platte (79, 89) angeordnet ist.

11. Slab- oder Bandleiterlaser nach Anspruch 1, **dadurch gekennzeichnet**, daß Elektroden (90) aus voneinander räumlich getrennten Einzelsegmenten (92a, 92b, 94a, 94b) vorgesehen sind, die durch Halterungen (97) miteinander verbunden sind.

12. Slab- oder Bandleiterlaser nach einem der vorhergehenden Ansprüche, **dadurch gekennzeichnet**, daß zwischen den Elektroden (2, 4) Abstandshalter (12) angeordnet sind.

13. Slab- oder Bandleiterlaser nach Anspruch 12, **dadurch gekennzeichnet**, daß eine Elektrode (2) gleitfähig auf einem Träger (3) gelagert ist.

14. Slab- oder Bandleiterlaser nach einem der vorhergehenden Ansprüche, **dadurch gekennzeichnet**, daß jeder Abschnitt (22, 24, 26; 42, 44, 46) Kanäle für ein Kühlmittel enthält.

15. Slab- oder Bandleiterlaser nach Anspruche 14, **dadurch gekennzeichnet**, daß die Abschnitte (22, 24, 26; 42, 44, 46) durch elastische, das Kühlmittel führende Verbindungselemente (14) untereinander verbunden sind.

16. Slab- oder Bandleiterlaser nach einem der vorhergehenden Ansprüche, **dadurch gekennzeichnet**, daß ein Hochfrequenzgenerator (16) an sich quer zur Längsrichtung erstreckenden Stirnseiten der Elektroden (2, 4) angeschlossen ist.

17. Slab- oder Bandleiterlaser nach einem der Ansprüche 1 bis 15, **dadurch gekennzeichnet,** daß ein Hochfrequenzgenerator (16) an eine Längskante der Elektroden (2, 4) angeschlossen ist.

## Claims

1. Slab or strip conductor laser with cooled electrodes (2, 4) parallel to each other, which form a discharge area (5) between their flat sides (29, 49) which face each other, in which discharge area there is a gas to be pumped, characterized in that the electrodes (2, 4) each comprise several sections (22, 24, 26 and 42, 44, 46), which are spatially continuously separated from each other at least over a part of the thickness (d) of the respective electrode (2 and 4), whereby the electrodes (2, 4) are mounted in such a way that the movements of their flat sides (28 and 48) directed away from the discharge area (5), which movements are caused by thermal expansion, are only opposed by a negligible mechanical resistance.

2. Slab or strip conductor laser according to claim 1, characterized in that the sections (22, 24, 26; 42, 44, 46) are spatially separate from each other over the larger part of the thickness (d) of the respective electrode (2 and 4).

3. Slab or strip conductor laser according to claim 1 or claim 2, characterized in that the sections (22, 24, 26; 42, 44, 46) are separated from each other by groove-shaped recesses (6) in a flat side (28 and 48) of the electrode (2 and 4).

4. Slab or strip conductor laser according to claim 3, characterized in that groove-shaped recesses (6) are provided at the flat sides (28, 48) of the electrodes (2, 4) which are directed away from the discharge area (5).

5. Slab or strip conductor laser according to claim 3 or 4, characterized in that with electrodes (2, 4) extended in a longitudinal direction groove-shaped recesses (6) extending at right angles to this longitudinal direction are provided.

6. Slab or strip conductor laser according to one of claims 3 or 5, characterized in that groove-shaped recesses (7) are provided at the flat sides (69) of the electrodes (60) which face the discharge area (5).

7. Slab or strip conductor laser according to one of claims 3 to 6, characterized in that the depth of the groove-shaped recesses (6) amounts to more than 4/5, in particular more than 9/10 of the thickness of the electrode (2, 4).

8. Slab or strip conductor laser according to one of claims 3 to 7, characterized in that the groove base is rounded.

9. Slab or strip conductor laser according to claim 1 or claim 2, characterized in that electrodes (70, 80) with a respective first layer (71 or 82) and a second layer (72 or 89) are provided, of which one layer (72 or 82) is formed by several individual segments (73-76 and 83a, 83b, 84a, 84b) arranged spatially separated next to each other on the other layer (71 or 89).

10. Slab or strip conductor laser according to claim 6 or claim 9, characterized in that a plate (79, 89) covering the individual segments (73 - 76, 83a,b, 84a,b) is arranged on the flat sides of the electrodes (70, 80) which face the discharge area (5).

11. Slab or strip conductor laser according to claim 1, characterized in that electrodes (90) comprising individual segments (92a, 92b, 94a, 94b) spatially separate from each other are provided, which are connected to each other by way of mounting supports (97).

12. Slab or strip conductor laser according to one of the preceding claims, characterized in that spacers (12) are arranged between the electrodes (2, 4).

13. Slab or strip conductor laser according to claim 12, characterized in that an electrode (2) is mounted in a slidable manner on a support (3).

14. Slab or strip conductor laser according to one of the preceding claims, characterized in that each section (22, 24, 26; 42, 44, 46) includes ducts for a coolant.

15. Slab or strip conductor laser according to claim 14, characterized in that the sections (22, 24, 26; 42, 44, 46) are connected to each other by elastic connection elements (14) conducting the coolant.

16. Slab or strip conductor laser according to one of the preceding claims, characterized in that a high-frequency generator (16) is connected to front sides of the electrodes (2, 4) which extend at right angles to the longitudinal direction.

17. Slab or strip conductor laser according to one of claims 1 to 15, characterized in that a high-frequency generator (16) is connected to a longitudinal edge of the electrodes (2, 4).

## Revendications

1. Laser à ruban ou slab, comportant des électrodes (2,4) refroidies parallèles l'une à l'autre, qui forment entre leurs faces planes (29, 49) tournées l'une vers l'autre une chambre (5) de décharge, dans laquelle se trouve un gaz à pomper, caractérisé en ce que les électrodes (2, 4) sont en plusieurs parties (22, 24, 26 ou 42, 44, 46), qui sont séparées les unes des autres, de manière ininterrompue dans l'espace, au moins sur une partie de l'épaisseur (d) de l'électrode considérée (2 ou 4), les électrodes (2, 4) étant montées, de telle sorte qu'il ne soit opposé aux mouvements de leurs faces planes (28 ou 48) éloignées de la chambre (5) de décharge, qui sont provoqués par la dilatation thermique, qu'une résistance mécanique négligeable.

2. Laser à ruban ou slab suivant la revendication 1, caractérisé en ce que les parties (22, 24, 26 ; 42, 44, 46) sont séparées les unes des autres dans l'espace sur la majeure partie de l'épaisseur (d) de l'électrode considérée (2 ou 4).

3. Laser à ruban ou slab suivant la revendication 1 ou la revendication 2, caractérisé en ce que les parties (22, 24, 26 ; 42, 44, 46) sont séparées les unes des autres par des rainures (6) dans une face plane (28 ou 48) de l'électrode (2 ou 4).

4. Laser à ruban ou slab suivant la revendication 3, caractérisé en ce que des rainures (6) sont ménagées sur les faces planes (28, 48), éloignées de la chambre (5) de décharge, des électrodes (2, 4).

5. Laser à ruban ou slab suivant la revendication 3 ou 4, caractérisé en ce qu'il est prévu des rainures (6) s'étendant transversalement à la direction longitudinale, dans laquelle s'étendent les électrodes (2, 4).

6. Laser à ruban ou slab suivant l'une des revendications 3 ou 5, caractérisé en ce que des rainures (7) sont ménagées sur les faces planes (69), tournées vers la chambre de décharge (5), des électrodes (60).

7. Laser à ruban ou slab suivant l'une des revendications 3 à 6, caractérisé en ce que la profondeur des rainures (6) est supérieure à 4/5, notamment supérieure à 9/10 de l'épaisseur de l'électrode (2, 4).

8. Laser à ruban ou slab suivant l'une des revendications 3 à 7, caractérisé en ce que la base de la rainure est arrondie.

9. Laser à ruban ou slab suivant la revendication 1 ou la revendication 2, caractérisé en ce qu'il est prévu des électrodes (70, 80) comportant chacune une première couche (71 ou 82) et une deuxième couche (72 ou 89), dont l'une des couches (72 ou 82) est formée de plusieurs segments (73 à 76 ou 83a, 83b, 84a, 84b) distincts, séparés dans l'espace et disposés côte à côte sur l'autre couche (71 ou 89).

10. Laser à ruban ou slab suivant la revendication 6 ou la revendication 9, caractérisé en ce qu'une plaque (79, 89) recouvrant les segments distincts (73 à 76, 83a, b, 84a, b) est montée sur les faces planes, tournées vers la chambre (5) de décharge, des électrodes (70, 80).

11. Laser à ruban ou slab suivant la revendication 1, caractérisé en ce qu'il est prévu des électrodes (90) constituées de segments distincts (92a, 92b, 94a, 94b), qui sont séparés les uns des autres dans l'espace et qui sont reliés les uns aux autres par des fixations (97).

12. Laser à ruban ou slab suivant l'une des revendications précédentes, caractérisé en ce qu'il est prévu des entretoises (12) entre les électrodes (2, 4).

13. Laser à ruban ou slab suivant la revendication 12, caractérisé en ce qu'une électrode (2) est montée glissante sur un support (3).

14. Laser à ruban ou slab suivant l'une des revendications précédentes, caractérisé en ce que chaque partie (22, 24, 26 ; 42, 44, 46) comprend des canaux par un fluide de refroidissement.

15. Laser à ruban ou slab suivant la revendication 14, caractérisé en ce que les parties (22, 24, 26 ; 42, 44, 46) sont reliées entre elles par des éléments (14) de liaison élastiques guidant le fluide de refroidissement.

16. Laser à ruban ou slab suivant l'une des revendications précédentes, caractérisé en ce qu'un générateur (16) haute fréquence est connecté aux faces frontales, s'étendant transversalement à la direction longitudinale, des électrodes (2, 4).

17. Laser à ruban ou slab suivant l'une des revendicaitons 1 à 15, caractérisé en ce qu'un générateur (16) haute fréquence est connecté à un bord longitudinal des électrodes (2,4).
